(19) Europäisches Patentamt
European Patent Office
Office européen des brevets

(11) **EP 3 027 033 B1**

(12) **EUROPEAN PATENT SPECIFICATION**

(45) Date of publication and mention
of the grant of the patent:
**07.10.2020 Bulletin 2020/41**

(51) Int Cl.:
*A23B 4/005* (2006.01)          *F24C 7/08* (2006.01)
*G01N 21/64* (2006.01)          *G01K 11/20* (2006.01)
*A23L 5/10* (2016.01)

(21) Application number: **14747924.0**

(22) Date of filing: **04.08.2014**

(86) International application number:
**PCT/EP2014/066677**

(87) International publication number:
**WO 2015/015010 (05.02.2015 Gazette 2015/05)**

(54) **APPARATUS AND METHOD FOR CONTROLLING FOOD TEMPERATURE**

VORRICHTUNG UND VERFAHREN ZUR STEUERUNG DER TEMPERATUR VON NAHRUNGSMITTELN

APPAREIL ET PROCÉDÉ POUR RÉGULER LA TEMPÉRATURE D'UN ALIMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2013 PCT/CN2013/080684**
**27.09.2013 EP 13186273**

(43) Date of publication of application:
**08.06.2016 Bulletin 2016/23**

(73) Proprietor: **Koninklijke Philips N.V.**
**5656 AG Eindhoven (NL)**

(72) Inventors:
• **SUN, Ming**
**NL-5656 AE Eindhoven (NL)**
• **YIN, Bin**
**NL-5656 AE Eindhoven (NL)**
• **KARAKAYA, Koray**
**NL-5656 AE Eindhoven (NL)**
• **LI, Qing**
**NL-5656 AE Eindhoven (NL)**

(74) Representative: **Freeke, Arnold**
**Philips Intellectual Property & Standards**
**High Tech Campus 5**
**5656 AE Eindhoven (NL)**

(56) References cited:
**DE-A1-102008 009 660     FR-A1- 2 806 159**
**JP-A- 2001 004 459**

**Description**

FIELD OF THE INVENTION

The invention relates to cooking process control, and particularly relates to apparatuses and method for controlling food temperature during the cooking process.

BACKGROUND OF THE INVENTION

Temperature controlling is an important element during cooking process, which will influence food nutrition and flavor significantly. Taking vegetable oils as an example, the vegetable oils should be used below their smoke point, for healthy consideration. The smoke point is the temperature at which the vegetable oil will start to smoke and begin to decompose. Deep frying vegetable oils will undergo a series of complex chemical reactions, such as oxidation, polymerization, hydrolysis, cis/trans isomerization, conjugation, pyrolysis, and cyclization. These reactions are known to affect organoleptic, nutritive, and functional properties of the fried food. Moreover, many degradation products of frying oils are harmful to human health because they destroy Vitamins, inhibit enzymes, and can potentially cause mutations and gastrointestinal irritations. Therefore, how to control vegetable oils temperature is a crucial issue for cooking process.
There are types of methods for temperature measurement, i.e., invasive and noninvasive methods. The invasive methods (e.g. thermistors and thermoelements) require electrical wiring, which can produce strong electromagnetic noise along with possibly perilous sparks and thus cannot be applied in inflammable and chemically reactive environments. Noninvasive instrumentation can be useful in determining the temperature of moving components by scanning at a point or over a region. Therefore, noninvasive methods are more suitable for complicated cooking process and intelligent kitchen products.
Most noninvasive methods are based on spectroscopic and acoustic techniques, such as infrared (IR) thermography (radiometry), thermoreflectance, optical interferometry, atomic absorption and emission spectroscopy, Raman scattering spectroscopy, luminescence spectroscopy, nuclear magnetic resonance (NMR) spectroscopy, and acoustic thermography. Most of them are used for scientific research and non-commercially available. Some optical techniques are highly expensive, requiring lasers, high quality optics, and specialized data acquisition equipment, and still at a laboratory stage of development.
Currently, IR thermometers are the most widespread spectroscopic techniques for temperature measurement or imaging, but require special infrared optical materials for infrared light transmission and detection, which will increase the manufacturing costs of instruments. In addition, many principal issues need to be considered in the design of an IR thermometer system, e.g. external surface emissivity of investigated materials, temperature range, atmospheric conditions, spectral sensitivity range, cooling constraints, spectral pass band, field of view and cost.
DE 10 2008 009 660 A1 describes methods of cooking food in a fluid medium, in which the fluorescence of molecules released by the foodstuff being cooked into the fluid medium is measured.

SUMMARY OF THE INVENTION

Vegetable oils are composed of triacylglycerols, free fatty acids and various minor compounds (e.g. phenols, Vitamin E (tocopherols & tocotrienols), carotenes and chlorophyll derivatives). These minor compounds are important for their nutrition and organoleptic (e.g. color, flavor, taste) characteristics. Besides, most of these minor compounds possess special optical properties (e.g. absorption, fluorescence and reflection) that are sensitive to temperature. Therefore, these minor compounds can be used, after optically detected, as natural intrinsic markers for temperature measurement of the vegetable oils.
In view of above-mentioned facts, the inventors have recognized that the fluorescence spectroscopy technology can be used in combination with the special optical properties of minor compounds in vegetable oils to detect the temperature of vegetable oils, due to its high sensitivity and specificity.
For tocopherols and phenols, the emission spectrum region lies between 300 and 400 nm, with excitation wavelength at ~250-310nm. Some derivatives of vitamin E are also associated with the emission spectrum region 400-600 nm. For Chl derivatives, the emission bands lie in the region of 600-700 nm with excitation wavelength at ~380-550nm. For degradation or oxidation compounds, the emission bands lie in the region of 350-550 nm with excitation wavelength at ~300-500nm. Amongst various minor compounds in vegetable oils, the contents of Vitamin E (tocopherols: 70-1900 mg/kg) are significant larger than that of other vegetable products (leaf/fruit/root, tocopherols: 0.1-50 mg/kg), whose fluorescence signal intensity suffices for stable detection. Vitamin E will be oxidized and decomposed with different decomposition speeds at different temperatures, and decomposes almost completely at about 500°C, which is above the smoke points of most vegetable oils. Therefore, Vitamin E can be chosen as one of the fluorescence markers for temperature controlling. Those skilled in the art can appreciate that the chlorophyll derivatives can also be chosen as one of the fluorescence markers for temperature controlling.

Based on the above concerns, in one aspect, one embodiment of the invention provides a method of controlling food temperature, the method comprising the steps of: heating food to a first target temperature; exciting a fluorescent marker of the food, wherein the fluorescent marker comprises a fluorophore of nutrient substance and/or anti-nutrient substance within the food; detecting current fluorescence-related parameter value of the fluorescence marker, and based on current heating time and predetermined relationships between heating time and fluorescence-related parameter value, calculating current reference fluorescence-related parameter value; comparing the detected current fluorescence-related parameter value with the calculated current reference fluorescence-related parameter value; and controlling heating power supplied to the food based on a comparison result, wherein the predetermined relationships between heating time and fluorescence-related parameter value are characterized by a function of:

$$I = I_0 * \exp(-kt)$$

wherein $I_0$ represents initial fluorescence-related parameter value of the fluorescence marker before the heating process, k represents the first order decomposition rate constant at the first target temperature, t represents heating time, and I represents fluorescence-related parameter value.

With the technical solution of the invention, food temperature can be well controlled during cooking process, and thus food nutrition control can be achieved.

For example, the fluorescent marker comprises a fluorophore of nutrient substance and/or anti-nutrient substance within the food.

Advantageously, the method further comprises the steps of: heating the food from the first target temperature to a second target temperature; exciting the fluorescent marker of the food; detecting current fluorescence-related parameter value of the fluorescence marker, and based on current heating time and predetermined relationships between heating time and fluorescence-related parameter value, calculating current reference fluorescence-related parameter value; comparing the detected current fluorescence-related parameter value with the calculated current reference fluorescence-related parameter value; and controlling heating power supplied to the food based on a comparison result; wherein the current heating time is reset to zero and re-counts at start point of heating from the first target temperature to the second target temperature, and the predetermined relationships between heating time and fluorescence-related parameter value is characterized by a function of :

$$I = I_0 * \exp(-kt)$$

wherein $I_0$ represents fluorescence-related parameter value of the fluorescence marker at the start point of heating from the first target temperature to the second target temperature, k represents the first order decomposition rate constant at the second target temperature, t represents heating time, and I represents fluorescence-related parameter value.

Advantageously, the method further comprises the steps of: cooling the food from the first target temperature to a third target temperature; exciting the fluorescent marker of the food; detecting current fluorescence-related parameter value of the fluorescence marker, and based on current heating time and predetermined relationships between heating time and fluorescence-related parameter value, calculating current reference fluorescence-related parameter value; comparing the detected current fluorescence-related parameter value with the calculated current reference fluorescence-related parameter value; and controlling heating power supplied to the food based on a comparison result; wherein the current heating time is reset to zero and re-counts at start point of cooling from the first target temperature to the third target temperature, and the predetermined relationships between heating time and fluorescence-related parameter value is characterized by a function of :

$$I = I_0 * \exp(-kt)$$

wherein $I_0$ represents fluorescence-related parameter value of the fluorescence marker at the start point of cooling from the first target temperature to the third target temperature, k represents the first order decomposition rate constant at the third target temperature, t represents heating time, and I represents fluorescence-related parameter value.

In such a way, food temperature control in a dynamic cooking process can be achieved.

In another aspect, one embodiment of the invention provides a device for controlling food temperature, the device comprising: a container configured to receive food; a heater configured to heat the food to a first target temperature; a light source configured to excite a fluorescent marker of the food, wherein the fluorescent marker comprises a fluorophore of nutrient substance and/or anti-nutrient substance within the food; a detector configured to detect current fluorescence-related parameter value of the fluorescence marker; and a controller configured to receive the detected current fluorescence-related parameter value from the detector, calculate current reference fluorescence-related parameter value based on current heating time and predetermined relationships between heating time and fluorescence-related parameter value, compare the detected current fluorescence-related parameter value with the calculated current reference fluorescence-related parameter value, and control heating power of the heater based on a comparison result, wherein the predetermined relationships between heating time and fluorescence-related parameter value are characterized by a function of:

$$I = I_0 * \exp(-kt)$$

wherein $I_0$ represents initial fluorescence-related parameter value of the fluorescence marker before the heating process, k represents the first order decomposition rate constant at the first target temperature, t represents heating time, and I represents fluorescence-related parameter value.

BRIEF DESCRIPTION OF THE DRAWINGS

The above and other objects and features of the present invention will become more apparent from the following detailed description considered in connection with the accompanying drawings, in which:

FIG. 1 shows a device for controlling food temperature according to one embodiment of the invention;
FIG. 2 shows a diagram of fluorescence intensity evolution curves versus heating time and temperature;
FIG. 3 shows a diagram of experimental (dot line) and fitted (solid line) of fluorescence intensity evolution curves versus heating time and temperature;
FIG. 4 shows a diagram of controlling for constant temperature and temperature switching;
FIG. 5 shows a diagram of theoretical calculation of fluorescence intensity evolution curves versus heating time and absolute temperature;
FIG. 6 shows a diagram of experimental (dot line) and fitted (solid line) temperature decay curves versus heating time;
FIG. 7 shows a diagram of controlling for dynamic temperature and temperature switching; and
FIG. 8 shows a flow chart of a method of controlling food temperature according to one embodiment of the invention.

Throughout the above drawings, like reference numerals will be understood to refer to like, similar or corresponding features or functions.

DETAILED DESCRIPTION OF EMBODIMENTS

Reference will now be made to embodiments of the invention, one or more examples of which are illustrated in the figures. The embodiments are provided by way of explanation of the invention, and are not meant as a limitation of the invention. For example, features illustrated or described as part of one embodiment may be used with another embodiment to yield still a further embodiment. It is intended that the invention encompass these and other modifications and variations as come within the scope of the invention as defined in and by the appended claims.

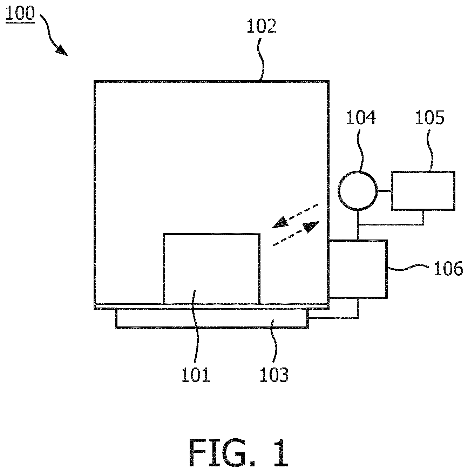

Figure 1 illustrates a device 100 for controlling food temperature. Device 100 comprises a container 102 for receiving food 101, which maybe made of metal, glass or other materials with good thermal conductivity. Advantageously, container 102 may constitute a closed space during the operation of device 100 such that the accuracy of food temperature controlling could be improved.

Any types of food which have intrinsic auto-fluorophores (referred to as "fluorescent marker" below) are applicable here to have its temperature to be measured and then controlled during cooking, for example, oil, seed, leaf, fruit, root, meat, fish, egg, milk, etc. Based on different types of food, the fluorescent marker may for example be vitamin E, chlorophyll derivatives, oxidation compounds, etc.

Advantageously, foods may be sorted into different categories, each category corresponding to one set of relationships between heating time and fluorescence-related parameter value of this category, which may be obtained in advance by experiment and will be described in details later. In one example, foods may be divided into different categories in terms of food type (e.g. fruit, vegetable, meat, milk, etc.), initial food condition (e.g. freezing, freshness, room temperature storage) and target food temperature. Those skilled in the art can appreciate that, the food type is associated with the selection of light source that is used to excite the fluorescent marker of the food.

Still referring to Figure 1, device 100 further comprises a heater 103 configured to heat food 101 in container 102. Heater 103 may be disposed in any suitable position where heat generated by heater 103 can be transferred to food 101 by conduction and/or convection and/or radiation, for example, be disposed at the bottom of container 102 and/or at the top of container 102. Various types of heaters may be used herein, for example, a heating tube, a heating plate and so forth.

Device 100 further comprises a light source 104 configured to excite a fluorescent marker of food 100 with an excitation spectrum. Typical, food 101 may include one or more fluorescent markers, and one desired fluorescent marker can be selected in advance to achieve food temperature controlling. Advantageously, light source 104 may include a plurality of light emitting units, each unit corresponding to one type of fluorescent marker. During the operation of device 100, one desired light emitting unit can be chosen as the excitation light source based on the type of selected fluorescent marker. For example, when vitamin E is selected as the fluorescent marker, the ultraviolet LED or laser can be chosen as the excitation light source.

Device 100 further comprises a detector 105 configured to detect current fluorescence-related parameter value of the fluorescence marker within a detection bandwidth. Detector 105 may be photosensitive diode, photoelectric electron multiplier tube (PMT), etc. Advantageously, to eliminate the disturbance directly from light source 104, a band pass or high/low pass filter can be applied in front of detector 105 according to the fluorescence band of selected fluorescent marker.

Device 100 further comprises a controller 106 electrically coupled to heater 103, light source 104 and detector 105. Controller 106 may be a micro control unit (MCU), for example.

During the operation of device 100, first, controller 106 controls heater 103 to heat food 101 to the first target temperature, for example 150°C. In one example, during the heating process, controller 106 calculates current temperature of food 101 based on current heating time and predetermined relationships between heating time and food temperature, and then judges whether the current temperature of food 101 has reached the first target temperature. Controller 106 performs above steps of calculating and judging repeatedly until the current temperature of food 101 has reached the first target temperature. Like above-mentioned relationships between heating time and fluorescence-related parameter value, each category of foods also corresponds to one set of relationships between heating time and food temperature of this category, which may be obtained in advance by experiment and will be described in details later. With the specific category of food 101, controller 106 can find the desired set of relationships between heating time and food temperature in related to food 101 from a plurality of sets of relationships between heating time and food temperature, and thus obtain current temperature of food 101 based on the current heating time.

In another example, during the heating process, controller 106 controls light source 104 to excite the fluorescent marker of food 101. After the fluorescent marker of food 101 is excited, detector 105 detects a plurality of fluorescence-related parameter values of the fluorescence marker continuously. Then controller 106 determines current absolute temperature of food 101 based on the plurality of fluorescence-related parameter values received from detector 105 and predetermined relationships among fluorescence-related parameter value, heating time and absolute temperature, and then judges whether the current absolute temperature of food 101 has reached the first target temperature. Controller 106 performs above steps of determining and judging repeatedly until the current temperature of food 101 has reached the first target temperature.

After the current temperature of food 101 has reached the first target temperature, controller 106 starts temperature controlling of food 101. First, controller 106 controls light source 104 to excite the fluorescent marker of food 101. After the fluorescent marker of food 101 is excited, detector 105 detects the current fluorescence-related parameter value of the fluorescence marker and then provides the detected current fluorescence-related parameter value to controller 106. Meanwhile, controller 106 calculates the current reference fluorescence-related parameter value based on current heating time and predetermined relationships between heating time and fluorescence-related parameter value, and then compares the detected current fluorescence-related parameter value received from detector 105 with the calculated current reference fluorescence-related parameter value. Then, controller 106 controls heating power of heater 103 based on the comparison result. For example, controller 106 may increase the heating power of heater 103 if the comparison result indicates that the detected current fluorescence-related parameter is larger than the calculated current reference fluorescence-related parameter, and may decreases the heating power of heater 103 if the comparison result indicates that the detected current fluorescence-related parameter is lower than the calculated current reference fluorescence-related parameter. When the detected current fluorescence-related parameter is larger than the calculated current reference fluorescence-related parameter, it means the temperature of food 100 is a bit lower than the desired temperature, and therefore the heating power of heater 103 is increased by controller 106, and vice versa.

The fluorescence-related parameter may be fluorescence intensity, fluorescence peak energy, peak intensity ratio, bandwidth, bandshape, polarization, spectral shift, and excited states lifetime, etc. Hereinafter, how to obtain the predetermined relationships between heating time and food temperature, the predetermined relationships between heating time and fluorescence-related parameter value and the predetermined relationships among fluorescence-related parameter value, heating time and absolute temperature will be described in detail using peanut oil as an example of food 100, Vitamin E as an example of the fluorescence marker and fluorescence intensity as an example of the fluorescence-related parameter.

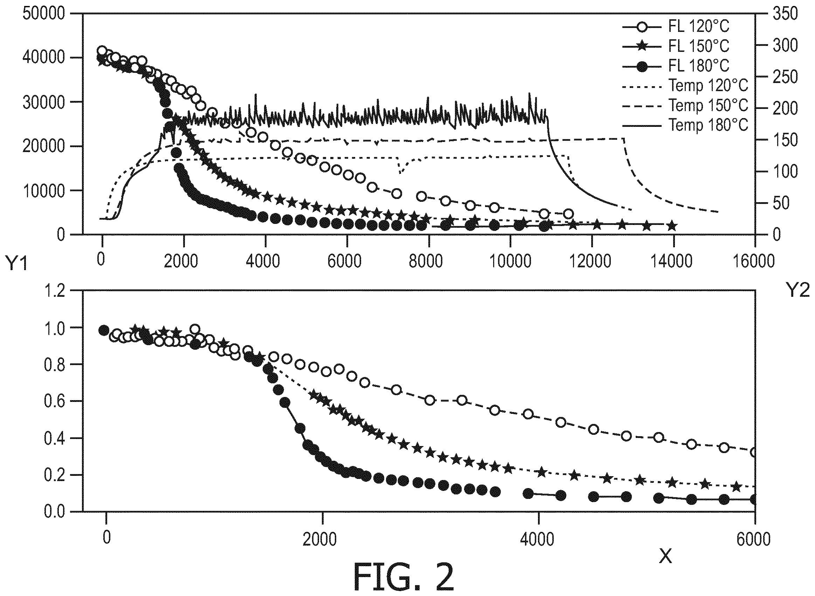

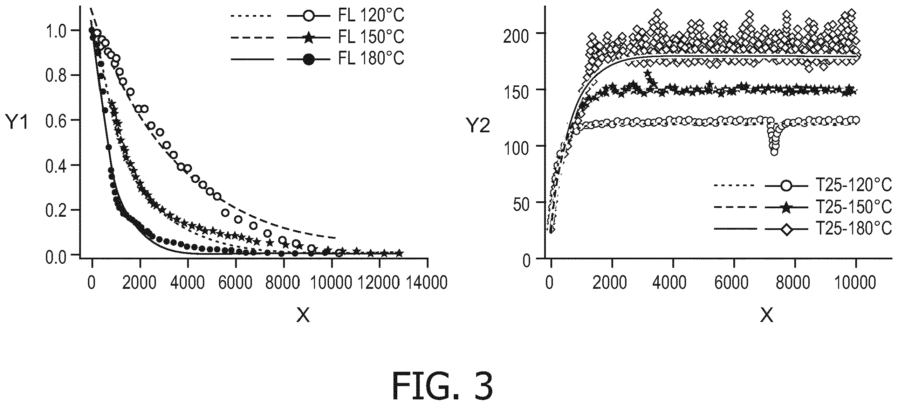

Referring to figure 2, three fluorescence intensity evolution curves versus heating time and temperature (from 25°C to 120°C, from 25°C to 150°C, from 25°C to 180°C respectively) are illustrated, in which X represents heating time, Y1 represents fluorescence intensity, Y2 represents temperature, and the upper figure shows the original curves and the lower figure shows the normalized curves. The decreasing rates of fluorescence intensity, corresponding to the decomposition rates of Vitamin E, are proportional to the heating temperature and time. The decomposition kinetics of Vitamin E can be analyzed by combining first order reaction model, which can be derived from the fluorescence intensity evolution curves versus time (Exponential Fitting, Equation 1, Figure 3(left)), with the *Arrhenius equation* (Equation 2). For different heating power or heater, the heating rate can be derived from the temperature evolution curves versus time (ExpDec1 Fitting, Equation 3, Figure 3(right)). In figure 3, X represents heating time, Y1 represents fluorescence intensity and Y2 represents temperature. Moreover, in the left part of figure 3, "·······" represents the exponential fit of fluorescence intensity with target temperature of 120°C, "- - - -" represents the exponential fit of fluorescence intensity with target temperature of 150°C, "-" represents the exponential fit of fluorescence intensity with target temperature of 180°C; in the right part of figure 3, "·······" represents the ExpDec 1 fit of temperature from 25°C to 120°C, "- - - -" represents the ExpDec 1 fit of temperature from 25°C to 150°C, "-" represents the ExpDec 1 fit of temperature from 25°C to 180°C.

$$I = I_0 * \exp(-kt) \qquad \qquad \text{Equation 1}$$

$$k = k_0 * \exp(-E/RT_k) \qquad \qquad \text{Equation 2}$$

$$T_c = -T_i * \exp(-t/P) + T_b \qquad \qquad \text{Equation 3}$$

$$T_k = T_c + 273.15 \qquad \qquad \text{Equation 4}$$

$$T_b - T_i = T_{initial} \qquad \qquad \text{Equation 5}$$

where $I_0$ is initial fluorescence intensity of Vitamin E before the heating process; k is the first order decomposition rate constant at the first target temperature, which depends on the type of food; t is the heating time (s); I is the real-time fluorescence intensity value; $k_0$ is a temperature-independent constant; E is the activation energy (J/mol) of Vitamin E, which is dependent on the type of food; R is gas constant (8.3145 $Jmol^{-1}k^{-1}$); $T_k$ is the temperature in Kelvin (k); $T_c$ is the real-time food temperature in Celsius (°C) during heating process; $T_b$ is the target food temperature (°C); $T_b$-$T_i$ is approximately equal to initial food temperature ($T_{initial} \pm 15$°C); P is a heating rate dependent constant for the target food temperature.

Herein, reaction kinetics modeling and parameter estimations were done by fitting (Exponential or ExpDec1 functions) of the evolution curves of fluorescence intensity (or temperature) versus heating time, and further calculated by using *Arrhenius equation.* For peanut oil, at least two experimental evolution curves of fluorescence intensity versus heating time are needed for fitting and calculating the activation energy (E) and constant ko (Equation 2). And one experimental evolution curve of temperature versus heating time is needed for fitting and extracting the constant P (Equation 3). The reaction (or decomposition) kinetic parameters of Vitamin E and temperature increasing and decaying parameters were fitted, calculated and displayed in Table 1.

Table 1. Fluorescence Kinetic degradation parameters of Vitamin E in peanut oil at different heating temperature and time.

| Parameters | $I = I_0 * \exp(-kt)$ | $k = k_0 * \exp(-E/RT_k)$ | | $T_c = -T_i * \exp(-t/P) + T_b$ | | | |
|---|---|---|---|---|---|---|---|
| Temperature | $k$ | $k_0$ | E | $T_{initial}$ | $T_b$ | $T_i$ | $P$ |
| 25-120 °C | -2.71467E-4 | 30.96012 | 38167J/mol | 25±15°C | 120 °C | 95±15 | 285.62824 |
| 25-150 °C | -5.6242E-4 | 30.96012 | 38167J/mol | 25±15°C | 150 °C | 125±15 | 520.68446 |
| 25-180°C | -0.00128 | 30.96012 | 38167J/mol | 25±15°C | 180 °C | 155±15 | 678.24116 |

The equations 1-5 and the parameters of Table 1 (i.e, the predetermined relationships between heating time (t) and food temperature ($T_c$) as well as the predetermined relationships between heating time (t) and fluorescence intensity (I) value) may be pre-stored in the storage of controller 106, for example. Alternatively, the predetermined relationships may also be pre-stored in an external storage and controller 106 may acquire them from the external storage while needed. Those skilled in the art can appreciate that a plurality of sets of predetermined relationships in terms of different categories of foods maybe obtained by experiment in advance and prestored in the storage of controller 106 or an external storage.

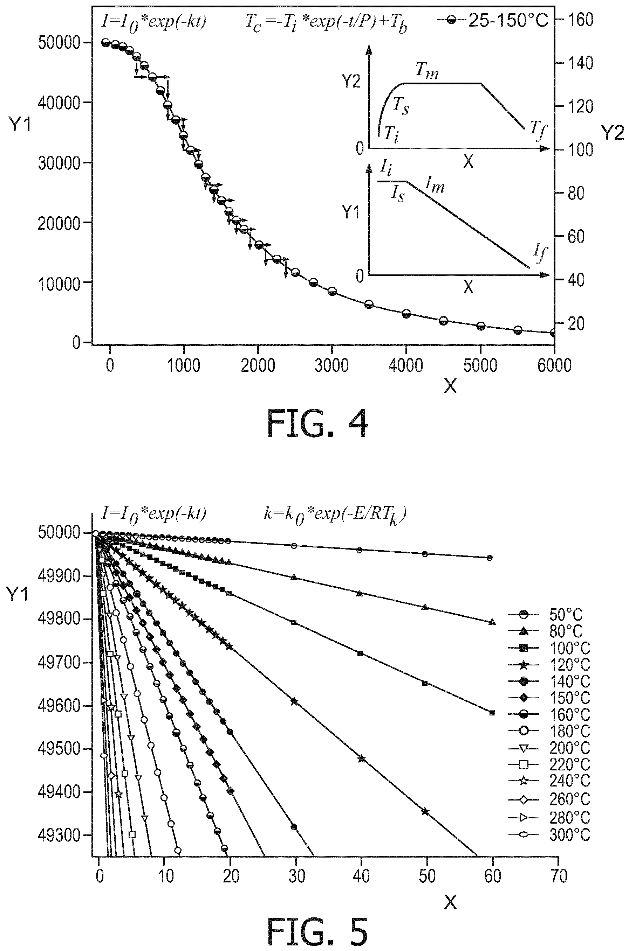

By using equations 1-5 and the parameters of Table 1, the food temperature ($T_c$) evolution curves versus heating time (t), the first order decomposition rate constant (k) of different temperature ($T_k$) and the fluorescence intensity (I) evolution curves versus heating time for different temperatures and initial fluorescence intensities (fluorescence arbitrary units, FL a.u.) can be calculated and used as temperature controlling, as shown in figure 4, in which X represents heating time, Y1 represents fluorescence intensity and Y2 represents temperature.

For each category of food, the predetermined relationships among fluorescence-related parameter value, heating time and absolute temperature can be derived from the equations 1 and 2 by setting different values of $T_k$ (i.e., the absolute temperature $T_a$), as shown in figure 5, in which $T_a$ =25°C-300°C, Io=50000 (FL a.u.), $P$= $P_{150°C}$ =520.68446, $k_0$=$k_{PeanutOil}$ =30.96012, and E=$E_{PeanutOil}$=38167J/mol, X represents heating time and Y1 represents fluorescence intensity.

Advantageously, controller 106 may further control heater 103 to heat food 101 from the first target temperature to the second target temperature, for example from 150°C to 180°C. In one example, during the heating process, controller 106 calculates current temperature of food 101 based on current heating time and predetermined relationships between heating time and food temperature, and then judges whether the current temperature of food 101 has reached the second target temperature. Controller 106 performs above steps of calculating and judging repeatedly until the current temperature of food 101 has reached the second target temperature. In this example, the current heating time is reset to zero and re-counts at the start point of heating from the first target temperature to the second target temperature, and the predetermined relationships between heating time and food temperature is characterized by a function of:

$$T_c= -T_i*\exp(-t/P)+T_b$$

wherein $P$ represents a heating rate dependent constant for the second target temperature; $T_b$ represents the second target temperature of food 101, $T_b-T_i$ is approximately equal to the first target temperature of food 101; t represents the heating time; $T_c$ represents the real-time food temperature of food 101 during the heating process.

After the current temperature of food 101 has reached the second target temperature, controller 106 starts temperature controlling of food 101. First, controller 106 controls light source 104 to excite the fluorescent marker of food 101. After the fluorescent marker of food 101 is excited, detector 105 detects the current fluorescence-related parameter value of the fluorescence marker and then provides the detected current fluorescence-related parameter value to controller 106. Meanwhile, controller 106 calculates the current reference fluorescence-related parameter value based on current heating time and predetermined relationships between heating time and fluorescence-related parameter value, and then compares the detected current fluorescence-related parameter value received from detector 105 with the calculated current reference fluorescence-related parameter value. Then, controller 106 controls heating power of heater 103 based on the comparison result. For example, controller 106 may increase the heating power of heater 103 if the comparison result indicates that the detected current fluorescence-related parameter is larger than the calculated current reference fluorescence-related parameter, and may decreases the heating power of heater 103 if the comparison result indicates that the detected current fluorescence-related parameter is lower than the calculated current reference fluorescence-related parameter. Likewise, the current heating time is reset to zero and re-counts at the start point of heating from the first target temperature to the second target temperature, and the predetermined relationships between heating time and fluorescence-related parameter value is characterized by a function of:

$$I = I_0*\exp(-kt)$$

wherein $I_0$ represents fluorescence-related parameter value of the fluorescence marker at the start point of heating from the first target temperature to the second target temperature; k represents the first order decomposition rate constant at the second target temperature; t represents heating time; I represents the real-time fluorescence-related parameter value.

Advantageously, controller 106 may further control heater 103 to cool food 101 (e.g., switch off heater 103) from the second target temperature to the third target temperature, for example from 180°C to 120°C. In one example, during the cooling process, controller 106 calculates current temperature of food 101 based on current heating time and predetermined relationships between heating time and food temperature during cooling process, and then judges whether the current temperature of food 101 has reached the third target temperature. Controller 106 performs above steps of calculating and judging repeatedly until the current temperature of food 101 has reached the third target temperature. In this example, the current heating time is reset to zero and recounts at start point of cooling from the second target temperature to the third target temperature, and the predetermined relationships between heating time and food temperature during cooling process is characterized by a function of:

$$T_d = T_{d1} * \exp(-t/D_1) + T_{d2} * \exp(-t/D_2) + T_f$$

wherein $T_f$ represents the third target temperature; $T_{d1} + T_{d2} + T_f$ is approximately equal to the second target temperature; $D_1$, $D_2$ is the temperature and environmental-dependent decreasing rate constant at the second target temperature; t represents heating time; $T_d$ represents the real-time food temperature of food 101. The predetermined relationships between heating time and food temperature during cooling process can be obtained by experiment in advance and prestored in the storage of controller 106 or an external storage, which will be described in detail later.

After the current temperature of food 101 has reached the third target temperature, controller 106 starts temperature controlling of food 101. First, controller 106 controls light source 104 to excite the fluorescent marker of food 101. After the fluorescent marker of food 101 is excited, detector 105 detects the current fluorescence-related parameter value of the fluorescence marker and then provides the detected current fluorescence-related parameter value to controller 106. Meanwhile, controller 106 calculates the current reference fluorescence-related parameter value based on current heating time and predetermined relationships between heating time and fluorescence-related parameter value, and then compares the detected current fluorescence-related parameter value received from detector 105 with the calculated current reference fluorescence-related parameter value. Then, controller 106 controls heating power of heater 103 based on the comparison result. For example, controller 106 may increase the heating power of heater 103 if the comparison result indicates that the detected current fluorescence-related parameter is larger than the calculated current reference fluorescence-related parameter, and may decreases the heating power of heater 103 if the comparison result indicates that the detected current fluorescence-related parameter is lower than the calculated current reference fluorescence-related parameter. Likewise, the current heating time is reset to zero and re-counts at start point of cooling from the second target temperature to the third target temperature, and the predetermined relationships between heating time and fluorescence-related parameter value is characterized by a function of :

$$I = I_0 * \exp(-kt)$$

wherein /o represents fluorescence-related parameter value of the fluorescence marker at the start point of cooling from the second target temperature to the third target temperature; $k$ represents the first order decomposition rate constant at the third target temperature; t represents the heating time; I represents the real-time fluorescence-related parameter value.

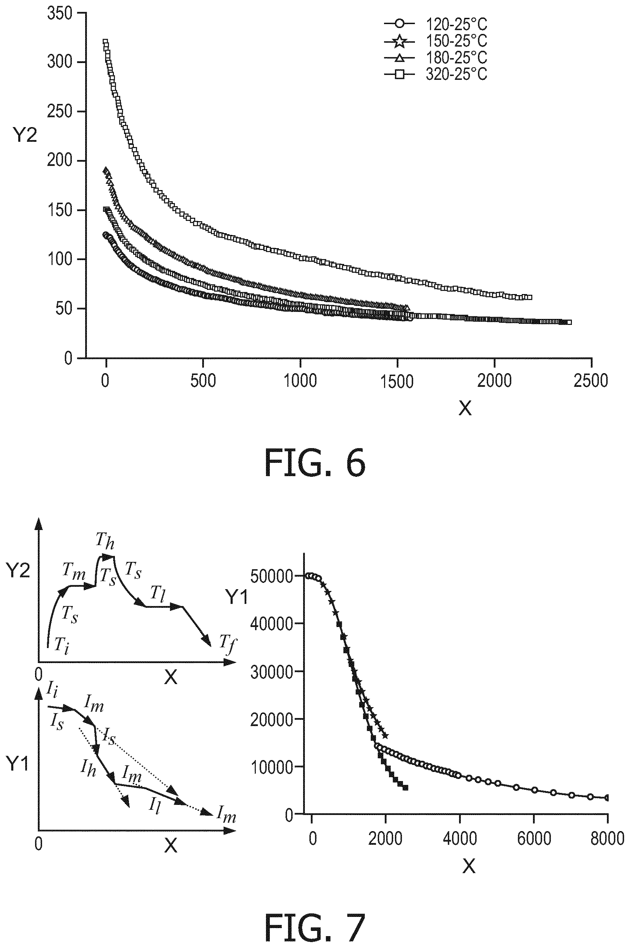

The predetermined relationships between heating time and food temperature during cooling process can be obtained by following way. The temperature decay kinetics equations and parameters are derived from the temperature decay curves (ExpDec2 Fitting, Equation 6-7, Figure 6, Table 2), when the heating power is switched off. In figure 6, X represents heating time, Y2 represents temperature, "······" represents ExpDec 2 fit of temperature from 120 °C to 20°C, "- - - -" represents ExpDec 2 fit of temperature from 150 °C to 20°C, "------" represents ExpDec 2 fit of temperature from 180 °C to 20°C, and " -" represents ExpDec 2 fit of temperature from 320 °C to 20°C.

$$T_d = T_{d1} * \exp(-t/D_1) + T_{d2} * \exp(-t/D_2) + T_f \qquad \text{Equation 6}$$

$$T_{d1} + T_{d2} + T_f = T_b \qquad \text{Equation 7}$$

Table 2. Temperature decay parameters versus time.

| Parameters | $T_d = T_{d1}*\exp(-t/D_1) + T_{d2}*\exp(-t/D_2) + T_f$ | | | | |
|---|---|---|---|---|---|
| Temperature | $T_f$ | $T_{d1}$ | $T_{d2}$ | $D_1$ | $D_2$ |
| 120-25°C | 25°C | 41.44137 | 60.84495 | 124.46406 | 1048.4110 9 |
| 150 -25°C | 25°C | 56.3819 | 67.88612 | 172.3137 | 1187.8175 9 |
| 180-25 °C | 25°C | 103.1872 3 | 58.53942 | 1025.2305 | 128.13295 |
| 320-25 °C | 25°C | 143.9196 3 | 141.21235 | 113.38526 | 1133.8533 2 |

By using the Equations 1-7 and the corresponding parameters ($I_0$, $k$, $k_0$, $E$, $P$, $T_k$, $T_b$, $T_i$, $D_1$, $D_2$, $T_{d1}$, $T_{d2}$, $T_f$), the temperature ($T_c$, $T_d$) versus time ($t$), the decomposition rate constant ($k$) of versus temperature ($T_k$), and the fluorescence intensity ($I$) versus time and temperature, can be calculated and used as references for absolute temperature measurement and dynamic temperature controlling, as shown in figure 7, in which $T_i$ represents initial, $T_m$ represents medium, $T_h$ represents higher, $T_l$ represents lower, $T_f$ represents final, $T_s$ represents switch; $I_i$ represents initial, $I_m$ represents medium, $I_h$ represents higher, $I_l$ represents lower, $I_f$ represents final, $I_s$ represents switch, X represents heating time, Y1 represents fluorescence intensity, Y2 represents temperature, "———●———" represents stage I (25°C-150 °C), "———★———" represents stage II (150 °C), "———◆———" represents stage III (150°C-180 °C), "———▮———" represents stage IV (180 °C), "———◌———" represents stage V (180°C-120 °C), and "———○———" represents stage VI (120 °C).

According to another aspect of the invention, there provides a method of controlling food temperature.

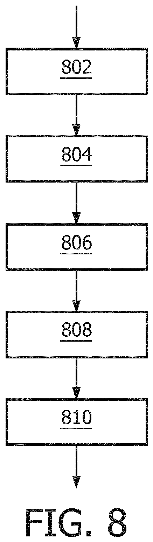

Referring to figure 8, the method comprises a step S802 of heating food to a first target temperature; a step S804 of exciting a fluorescent marker of the food, wherein the fluorescent marker corresponds to a fluorophore of nutrient substance and/or anti-nutrient substance within the food; a step S806 of detecting current fluorescence-related parameter value of the fluorescence marker, and based on current heating time and predetermined relationships between heating time and fluorescence-related parameter value, calculating current reference fluorescence-related parameter value; a step S808 of comparing the detected current fluorescence-related parameter value with the calculated current reference fluorescence-related parameter value; and a step S810 of controlling heating power supplied to the food based on a comparison result.

The predetermined relationships between heating time and fluorescence-related parameter value is characterized by a function of:

$$I = I_0 * \exp(-kt)$$

wherein $I_0$ represents initial fluorescence-related parameter value of the fluorescence marker before the heating process, k represents the first order decomposition rate constant at the first target temperature, t represents heating time, and I represents fluorescence-related parameter value.

It should be noted that the above described embodiments are given for describing rather than limiting the invention, and it is to be understood that modifications and variations may be resorted to without departing from the scope of the invention as those skilled in the art readily understand. Such modifications and variations are considered to be within the scope of the invention and the appended claims. The protection scope of the invention is defined by the accompanying claims. In addition, any of the reference numerals in the claims should not be interpreted as a limitation to the claims. Use of the verb "comprise" and its conjugations does not exclude the presence of elements or steps other than those stated in a claim. The indefinite article "a" or "an" preceding an element or step does not exclude the presence of a plurality of such elements or steps.

**Claims**

1. A method of controlling food temperature, the method comprising the steps of:

   - heating food to a first target temperature (802);
   - exciting a fluorescent marker of the food, wherein the fluorescent marker comprises a fluorophore of nutrient substance and/or anti-nutrient substance within the food (804);
   - detecting a current fluorescence-related parameter value of the fluorescence marker, and based on a current heating time and a predetermined relationship between heating time and fluorescence-related parameter value, calculating a current reference fluorescence-related parameter value (806);
- comparing the detected current fluorescence-related parameter value with the calculated current reference fluorescence-related parameter value to determine a comparison result (808);
- controlling a heating power supplied to the food based on said comparison result (810),

wherein the predetermined relationships between heating time and fluorescence-related parameter value are **characterized by** a function of:

$$I=I_0*\exp(-kt)$$

wherein $I_0$ represents initial fluorescence-related parameter value of the fluorescence marker before the heating process, k represents the first order decomposition rate constant at the first target temperature, t represents heating time, and I represents fluorescence-related parameter value.

2. The method of claim 1, wherein the step of heating the food to the first target temperature (802) further comprises the steps of:

- calculating a current temperature of the food based on a current heating time and a predetermined relationship between heating time and food temperature;
- judging whether the current temperature of the food has reached the first target temperature;
- performing the step of exciting a fluorescent marker of the food if the current temperature of the food has reached the first target temperature.

3. The method of claim 2, wherein the predetermined relationships between heating time and food temperature is **characterized by** a function of:

$$T_c= -T_i*\exp(-t/P)+T_b$$

wherein $P$ represents a heating rate dependent constant for the first target temperature, $T_b$ represents the first target temperature of the food, $T_b-T_i$ is approximately equal to initial food temperature of the food, t represents heating time, and $T_c$ represents food temperature of the food during the heating process.

4. The method of claim 1, wherein the step of heating the food to the first target temperature (802) further comprises the steps of:

- detecting a plurality of fluorescence-related parameter values of the fluorescence marker after the fluorescent marker of the food is excited;
- determining a current absolute temperature of the food, based on the plurality of fluorescence-related parameter values and predetermined relationships among fluorescence-related parameter values, heating time and absolute temperature;
- judging whether the current absolute temperature of the food has reached the first target temperature;
- performing the step of exciting a fluorescent marker of the food if the current absolute temperature of the food has reached the first target temperature.

5. The method of claim 1, wherein the step of controlling a heating power supplied to the food (810) comprises:

- increasing the heating power supplied to the food if the comparison result indicates that the detected current fluorescence-related parameter is larger than the calculated current reference fluorescence-related parameter; and decreasing the heating power supplied to the food if the comparison result indicates that the detected current fluorescence-related parameter is lower than the calculated current reference fluorescence-related parameter.

6. The method of claim 1, further comprising the steps of:

- heating the food from the first target temperature to a second target temperature;
- exciting a fluorescent marker of the food (804);
- detecting a current fluorescence-related parameter value of the fluorescence marker, and based on a current heating time and a predetermined relationship between heating time and fluorescence-related parameter value, calculating a current reference fluorescence-related parameter value (806);
- comparing the detected current fluorescence-related parameter value with the calculated current reference fluorescence-related parameter value (808);
- controlling a heating power supplied to the food based on a comparison result (810); wherein the current heating time is reset to zero and re-counts at start point of heating from the first target temperature to the second target temperature, and the predetermined relationships between heating time and fluorescence-related parameter value is **characterized by** a function of :

$$I = I_0 * \exp(-kt)$$

wherein $I_0$ represents fluorescence-related parameter value of the fluorescence marker at the start point of heating from the first target temperature to the second target temperature, $k$ represents the first order decomposition rate constant at the second target temperature, t represents heating time, and I represents fluorescence-related parameter value.

7. The method of claim 6, wherein the step of heating the food from the first target temperature to a second target temperature further comprises:

   - calculating a current temperature of the food based on a current heating time and a predetermined relationship between the heating time and the food temperature;
   - judging whether the current temperature of the food has reached the second target temperature;
   - performing the step of exciting a fluorescent marker of the food if the current temperature of the food has reached the second target temperature;

   wherein the current heating time is reset to zero and re-counts at start point of heating from the first target temperature to the second target temperature, and the predetermined relationships between heating time and food temperature is **characterized by** a function of:

$$T_c = -T_i * \exp(-t/P) + T_b$$

   wherein $P$ represents a heating rate dependent constant for the second target temperature, $T_b$ represents the second target temperature of the food, $T_b$-$T_i$ is approximately equal to the first target temperature of the food, t represents heating time, and $T_c$ represents food temperature of the food during the heating process.

8. The method of claim 1, further comprising the steps of:

   - cooling the food from the first target temperature to a third target temperature;
   - exciting a fluorescent marker of the food (804);
   - detecting a current fluorescence-related parameter value of the fluorescence marker, and based on a current heating time and a predetermined relationship between heating time and fluorescence-related parameter value, calculating current reference fluorescence-related parameter value (806);
   - comparing the detected current fluorescence-related parameter value with the calculated current reference fluorescence-related parameter value (808);
   - controlling a heating power supplied to the food based on a comparison result (810); wherein the current heating time is reset to zero and re-counts at start point of cooling from the first target temperature to the third target temperature, and the predetermined relationships between heating time and fluorescence-related parameter value is **characterized by** a function of:

$$I = I_0 * \exp(-kt)$$

wherein $I_0$ represents fluorescence-related parameter value of the fluorescence marker at the start point of cooling from the first target temperature to the third target temperature, $k$ represents the first order decomposition rate constant at the third target temperature, t represents heating time, and I represents fluorescence-related parameter value.

9. The method of claim 8, wherein the step of cooling the food from the first target temperature to the third target temperature further comprises the steps of:

- calculating a current temperature of the food based on a current heating time and a predetermined relationship between heating time and food temperature;
- judging whether the current temperature of the food has reached the third target temperature;
- performing the step of exciting a fluorescent marker of the food if the current temperature of the food has reached the third target temperature;

wherein the current heating time is reset to zero and recounts at start point of cooling from the first target temperature to the third target temperature, and the predetermined relationships between heating time and food temperature is **characterized by** a function of:

$$T_d = T_{d1} * \exp(-t/D_1) + T_{d2} * \exp(-t/D_2) + T_f$$

wherein $T_f$ represents the third target temperature, $T_{d1} + T_{d2} + T_f$ is approximately equal to the first target temperature, $D_1$, $D_2$ is the temperature and environmental-dependent decreasing rate constant at the first target temperature, t represents heating time, and $T_d$ represents food temperature of the food.

10. The method of claim 1, further comprising the steps of:

- receiving information of an initial food condition and the first target temperature of the food;
- detecting the initial fluorescence-related parameter value of the fluorescence marker before the heating process;

wherein the step of calculating the current reference fluorescence-related parameter value comprises:

- calculating the current reference fluorescence-related parameter value based on the received information of initial food condition and the first target temperature of the food, the detected initial fluorescence-related parameter value, a current heating time and a predetermined relationship between heating time and fluorescence-related parameter value.

11. The method of claim 1, wherein the fluorescence-related parameter comprises any one of: fluorescence intensity, fluorescence peak energy, peak intensity ratio, bandwidth, bandshape, polarization, spectral shift, and excited states lifetime; and the fluorescent marker comprises any one of: vitamin E, chlorophyll derivatives, and oxidation compounds.

12. A device (100) for controlling food temperature, the device comprising:

- a container (102) configured to receive food (101);
- a heater (103) configured to heat the food (101) to a first target temperature;
- a light source (104) configured to excite a fluorescent marker of the food (101), wherein the fluorescent marker comprises a fluorophore of nutrient substance and/or anti-nutrient substance within the food;
- a detector (105) configured to detect current fluorescence-related parameter value of the fluorescence marker;
- a controller (106) configured to receive the detected current fluorescence-related parameter value from the detector (105), calculate current reference fluorescence-related parameter value based on current heating time and predetermined relationships between heating time and fluorescence-related parameter value, compare the detected current fluorescence-related parameter value with the calculated current reference fluorescence-related parameter value, and control heating power of the heater based on a comparison result,

wherein the predetermined relationships between heating time and fluorescence-related parameter value are **char-**

**acterized by** a function of:

$$I=I_0*\exp(-k\text{t})$$

wherein $I_0$ represents initial fluorescence-related parameter value of the fluorescence marker before the heating process, k represents the first order decomposition rate constant at the first target temperature, t represents heating time, and I represents fluorescence-related parameter value.

13. The device (100) of claim 12, wherein during the heating process, the controller (106) is further configured to calculate current temperature of the food (101) based on current heating time and predetermined relationships between heating time and food temperature, to judging whether the current temperature of the food (101) has reached the first target temperature, and to control the light source (104) to excite if the current temperature of the food (101) has reached the first target temperature,
wherein the predetermined relationships between heating time and food temperature is **characterized by** a function of:

$$T_c= -T_i*\exp(-\text{t}/P)+T_b$$

wherein $P$ represents a heating rate dependent constant for the first target temperature, $T_b$ represents the first target temperature of the food, $T_b$-$T_i$ is approximately equal to initial food temperature of the food, t represents heating time, and $T_c$ represents food temperature of the food during the heating process.

**Patentansprüche**

1. Verfahren zum Steuern der Lebensmitteltemperatur, wobei das Verfahren die Schritte umfasst von:

- Erhitzen von Lebensmitteln auf eine erste Zieltemperatur (802);
- Erregen eines fluoreszierenden Markers des Lebensmittels, wobei der fluoreszierende Marker ein Fluorophor der Nährstoffsubstanz und/oder der Anti-Nährstoffsubstanz im Lebensmittel umfasst (804);
- Erfassen eines aktuellen fluoreszenzbezogenen Parameterwerts des Fluoreszenzmarkers und basierend auf einer aktuellen Heizzeit und einer vorbestimmten Beziehung zwischen Heizzeit und fluoreszenzbezogenem Parameterwert, Berechnen eines aktuellen fluoreszenzbezogenen Referenzparameterwerts (806);
- Vergleichen des erfassten aktuellen fluoreszenzbezogenen Parameterwerts mit dem berechneten aktuellen fluoreszenzbezogenen Referenzparameterwert, um ein Vergleichsergebnis zu ermitteln (808);
- Steuern einer dem Lebensmittel zugeführten Heizleistung basierend auf dem Vergleichsergebnis (810),

wobei die vorbestimmten Beziehungen zwischen der Heizzeit und dem fluoreszenzbezogenen Parameterwert durch eine Funktion gekennzeichnet sind von:

$$I=I_0*\exp(-k\text{t})$$

wobei $I_0$ den anfänglichen fluoreszenzbezogenen Parameterwert des Fluoreszenzmarkers vor dem Heizprozess darstellt, k die Zersetzungsratenkonstante erster Ordnung bei der ersten Zieltemperatur darstellt, t die Erwärmungszeit darstellt, und I den fluoreszenzbezogenen Parameterwert darstellt.

2. Verfahren nach Anspruch 1, wobei der Schritt des Erhitzens des Lebensmittels auf die erste Zieltemperatur (802) ferner die Schritte umfasst von:

- Berechnen einer aktuellen Temperatur des Lebensmittels basierend auf einer aktuellen Heizzeit und einer vorbestimmten Beziehung zwischen Heizzeit und Lebensmitteltemperatur;
- Beurteilen, ob die aktuelle Temperatur des Lebensmittels die erste Zieltemperatur erreicht hat;
- Ausführen des Schritts zum Erregen eines fluoreszierenden Markers des Lebensmittels, wenn die aktuelle Temperatur des Lebensmittels die erste Zieltemperatur erreicht hat.

3.  Verfahren nach Anspruch 2, wobei die vorbestimmten Beziehungen zwischen der Heizzeit und der Lebensmitteltemperatur durch eine Funktion gekennzeichnet sind von:

$$\mathrm{T_c} = -T_i * \exp(-t/P) + T_b$$

wobei $P$ eine von der Heizrate abhängige Konstante für die erste Zieltemperatur darstellt, $T_b$ die erste Zieltemperatur des Lebensmittels darstellt, $T_b$-$T_i$ ungefähr gleich der anfänglichen Lebensmitteltemperatur des Lebensmittels ist, t die Erwärmungszeit darstellt und $\mathrm{T_c}$ die Lebensmitteltemperatur des Lebensmittels während des Heizprozesses darstellt.

4.  Verfahren nach Anspruch 1, wobei der Schritt des Erhitzens des Lebensmittels auf die erste Zieltemperatur (802) ferner die Schritte umfasst von:

- Erfassen einer Vielzahl von fluoreszenzbezogenen Parameterwerten des Fluoreszenzmarkers, nachdem der Fluoreszenzmarker des Lebensmittels angeregt wurde;
- Bestimmen einer aktuellen absoluten Temperatur des Lebensmittels basierend auf der Vielzahl fluoreszenzbezogener Parameterwerte und vorbestimmter Beziehungen zwischen fluoreszenzbezogenen Parameterwerten, Heizzeit und absoluter Temperatur;
- Beurteilen, ob die aktuelle absolute Temperatur des Lebensmittels die erste Zieltemperatur erreicht hat;
- Ausführen des Schritts zum Erregen eines fluoreszierenden Markers des Lebensmittels, wenn die aktuelle absolute Temperatur des Lebensmittels die erste Zieltemperatur erreicht hat.

5.  Verfahren nach Anspruch 1, wobei der Schritt des Steuerns einer dem Lebensmittel (810) zugeführten Heizleistung umfasst:

- Erhöhen der dem Lebensmittel zugeführten Heizleistung, wenn das Vergleichsergebnis anzeigt, dass der erfasste aktuelle fluoreszenzbezogene Parameter größer ist als der berechnete aktuelle fluoreszenzbezogene Referenzparameter; und Verringern der dem Lebensmittel zugeführten Heizleistung, wenn das Vergleichsergebnis anzeigt, dass der erfasste aktuellen fluoreszenzbezogene Parameter niedriger ist als der berechnete aktuelle fluoreszenzbezogene Referenzparameter.

6.  Verfahren nach Anspruch 1, ferner umfassend die Schritte von:

- Erhitzen des Lebensmittels von der ersten Zieltemperatur auf eine zweite Zieltemperatur;
- Anregen eines fluoreszierenden Markers des Lebensmittels (804);
- Erfassen eines aktuellen fluoreszenzbezogenen Parameterwerts des Fluoreszenzmarkers und basierend auf einer aktuellen Heizzeit und einer vorbestimmten Beziehung zwischen Heizzeit und fluoreszenzbezogenem Parameterwert, Berechnen eines aktuellen fluoreszenzbezogenen Referenzparameterwerts (806);
- Vergleichen des erfassten aktuellen fluoreszenzbezogenen Parameterwerts mit dem berechneten aktuellen fluoreszenzbezogenen Referenzparameterwert (808);
- Steuern einer dem Lebensmittel zugeführten Heizleistung basierend auf einem Vergleichsergebnis (810);

wobei die aktuelle Heizzeit auf Null zurückgesetzt wird, und am Startpunkt des Aufheizens von der ersten Zieltemperatur auf die zweite Zieltemperatur neu gezählt wird, und die vorbestimmten Beziehungen zwischen der Heizzeit und dem fluoreszenzbezogenen Parameterwert durch eine Funktion gekennzeichnet sind von:

$$\mathrm{I} = I_0 * \exp(-kt)$$

wobei $I_0$ den fluoreszenzbezogenen Parameterwert des Fluoreszenzmarkers am Startpunkt des Erhitzens von der ersten Zieltemperatur auf die zweite Zieltemperatur darstellt, $k$ die Zersetzungsratenkonstante erster Ordnung bei der zweiten Zieltemperatur darstellt, t die Heizzeit darstellt, und I den fluoreszenzbezogenen Parameterwert darstellt.

7.  Verfahren nach Anspruch 6, wobei der Schritt des Erhitzens des Lebensmittels von der ersten Zieltemperatur auf eine zweite Zieltemperatur ferner umfasst:

- Berechnen einer aktuellen Temperatur des Lebensmittels basierend auf einer aktuellen Heizzeit und einer vorbestimmten Beziehung zwischen der Heizzeit und der Lebensmitteltemperatur;
- Beurteilen, ob die aktuelle Temperatur des Lebensmittels die zweite Zieltemperatur erreicht hat;
- Ausführen des Schritts zum Erregen eines fluoreszierenden Markers des Lebensmittels, wenn die aktuelle Temperatur des Lebensmittels die zweite Zieltemperatur erreicht hat;

wobei die aktuelle Heizzeit auf Null zurückgesetzt wird, und am Startpunkt des Erhitzens von der ersten Zieltemperatur auf die zweite Zieltemperatur neu gezählt wird, und die vorbestimmten Beziehungen zwischen der Heizzeit und der Lebensmitteltemperatur durch eine Funktion gekennzeichnet sind von:

$$T_c = -T_i * \exp(-t/P) + T_b$$

wobei $P$ eine von der Heizrate abhängige Konstante für die zweite Zieltemperatur darstellt, $T_b$ die zweite Zieltemperatur des Lebensmittels darstellt, $T_b - T_i$ ungefähr gleich der ersten Zieltemperatur des Lebensmittels ist, t die Erwärmungszeit darstellt, und $T_c$ die Lebensmitteltemperatur des Lebensmittels während des Heizprozesses darstellt.

8. Verfahren nach Anspruch 1, ferner umfassend die Schritte von:

- Abkühlen des Lebensmittels von der ersten Zieltemperatur auf eine dritte Zieltemperatur;
- Anregen eines fluoreszierenden Markers des Lebensmittels (804);
- Erfassen eines aktuellen fluoreszenzbezogenen Parameterwerts des Fluoreszenzmarkers und basierend auf einer aktuellen Heizzeit und einer vorbestimmten Beziehung zwischen Heizzeit und fluoreszenzbezogenem Parameterwert, Berechnen des aktuellen fluoreszenzbezogenen Referenzparameterwerts (806);
- Vergleichen des erfassten aktuellen fluoreszenzbezogenen Parameterwerts mit dem berechneten aktuellen fluoreszenzbezogenen Parameterwert (808);
- Steuern einer dem Lebensmittel zugeführten Heizleistung basierend auf einem Vergleichsergebnis (810);

wobei die aktuelle Heizzeit auf Null zurückgesetzt wird, und am Startpunkt des Abkühlens von der ersten Zieltemperatur auf die dritte Zieltemperatur neu gezählt wird, und die vorbestimmten Beziehungen zwischen der Heizzeit und dem fluoreszenzbezogenen Parameterwert durch eine Funktion gekennzeichnet sind von:

$$I = I_0 * \exp(-kt)$$

wobei $I_0$ den fluoreszenzbezogenen Parameterwert des Fluoreszenzmarkers am Startpunkt des Abkühlens von der ersten Zieltemperatur auf die dritte Zieltemperatur darstellt, k die Zersetzungsratenkonstante erster Ordnung bei der dritten Zieltemperatur darstellt, t die Heizzeit darstellt, und I den fluoreszenzbezogenen Parameterwert darstellt.

9. Verfahren nach Anspruch 8, wobei der Schritt des Abkühlens des Lebensmittels von der ersten Zieltemperatur auf die dritte Zieltemperatur ferner die Schritte umfasst von:

- Berechnen einer aktuellen Temperatur des Lebensmittels basierend auf einer aktuellen Heizzeit und einer vorbestimmten Beziehung zwischen Heizzeit und Lebensmitteltemperatur;
- Beurteilen, ob die aktuelle Temperatur des Lebensmittels die dritte Zieltemperatur erreicht hat;
- Ausführen des Schritts zum Erregen eines fluoreszierenden Markers des Lebensmittels, wenn die aktuelle Temperatur des Lebensmittels die dritte Zieltemperatur erreicht hat;

wobei die aktuelle Heizzeit auf Null zurückgesetzt wird und am Startpunkt des Abkühlens von der ersten Zieltemperatur auf die dritte Zieltemperatur neu gezählt wird, und die vorbestimmten Beziehungen zwischen Heizzeit und Lebensmitteltemperatur durch eine Funktion gekennzeichnet sind von:

$$T_d = T_{d1} * \exp(-t/D_1) + T_{d2} * \exp(-t/D_2) + T_f$$

wobei $T_f$ die dritte Zieltemperatur darstellt, $T_{d1} + T_{d2} + T_f$ ungefähr gleich der ersten Zieltemperatur ist, $D_1$, $D_2$ die

temperatur- und umweltabhängige abnehmende Geschwindigkeitskonstante bei der ersten Zieltemperatur ist, t die Heizzeit darstellt, und $T_d$ die Lebensmitteltemperatur des Lebensmittels darstellt.

10. Verfahren nach Anspruch 1, ferner umfassend die Schritte von:

- Empfangen von Informationen über einen anfänglichen Lebensmittelzustand und die erste Zieltemperatur des Lebensmittels;
- Erfassen des anfänglichen fluoreszenzbezogenen Parameterwerts des Fluoreszenzmarkers vor dem Heizprozess;

wobei der Schritt des Berechnens des aktuellen fluoreszenzbezogenen Referenzparameterwerts umfasst:

- Berechnung des aktuellen fluoreszenzbezogenen Referenzparameterwerts basierend auf den empfangenen Informationen des anfänglichen Lebensmittelzustands und der ersten Zieltemperatur des Lebensmittels, dem erfassten anfänglichen fluoreszenzbezogenen Parameterwert, einer aktuellen Heizzeit und einer vorbestimmten Beziehung zwischen Heizzeit und fluoreszenzbezogenem Parameterwert.

11. Verfahren nach Anspruch 1, wobei der fluoreszenzbezogene Parameter eines der Folgendes umfasst: Fluoreszenzintensität, Fluoreszenzpeakenergie, Peakintensitätsverhältnis, Bandbreite, Bandform, Polarisation, Spektralverschiebung und Lebensdauer der angeregten Zustände; und der fluoreszierende Marker umfasst eines von: Vitamin E, Chlorophyll-Derivaten und Oxidationsverbindungen.

12. Vorrichtung (100) zum Steuern der Lebensmitteltemperatur, wobei die Vorrichtung umfasst:

- einen Behälter (102), der für die Aufnahme von Lebensmitteln (101) konfiguriert ist;
- eine Heizung (103), die zum Erhitzen des Lebensmittels (101) auf eine erste Zieltemperatur konfiguriert ist;
- eine Lichtquelle (104), die konfiguriert ist, um einen fluoreszierenden Marker des Lebensmittels (101) anzuregen, wobei der fluoreszierende Marker ein Fluorophor der Nährstoffsubstanz und/oder der Anti-Nährstoffsubstanz innerhalb des Lebensmittels umfasst;
- einen Detektor (105), der konfiguriert ist, um den aktuellen fluoreszenzbezogenen Parameterwert des Fluoreszenzmarkers zu erfassen;
- eine Steuerung (106), die konfiguriert ist, um den erfassten aktuellen fluoreszenzbezogenen Parameterwert vom Detektor (105) zu empfangen, den aktuellen fluoreszenzbezogenen Referenzparameterwert basierend auf der aktuellen Heizzeit und den vorbestimmten Beziehungen zwischen der Heizzeit und dem fluoreszenzbezogenen Parameterwert zu berechnen, den erfassten aktuellen fluoreszenzbezogenen Parameterwert mit dem berechneten aktuellen fluoreszenzbezogenen Referenzparameterwert zu vergleichen, und die Heizleistung der Heizung basierend auf einem Vergleichsergebnis zu steuern,

wobei die vorbestimmten Beziehungen zwischen der Heizzeit und dem fluoreszenzbezogenen Parameterwert durch eine Funktion gekennzeichnet sind von:

$$I = I_0 * \exp(-kt)$$

wobei $I_0$ den anfänglichen fluoreszenzbezogenen Parameterwert des Fluoreszenzmarkers vor dem Heizprozess darstellt, k die Zersetzungsratenkonstante erster Ordnung bei der ersten Zieltemperatur darstellt, t die Heizzeit darstellt, und I den fluoreszenzbezogenen Parameterwert darstellt.

13. Vorrichtung (100) nach Anspruch 12, wobei während des Erwärmungsprozesses die Steuerung (106) weiter konfiguriert ist, um die aktuelle Temperatur des Lebensmittels (101) basierend auf der aktuellen Heizzeit und vorbestimmten Beziehungen zwischen der Heizzeit und der Lebensmitteltemperatur zu berechnen; zu beurteilen, ob die aktuelle Temperatur des Lebensmittels (101) die erste Zieltemperatur erreicht hat, und die Lichtquelle (104) zu steuern, um anzuregen, wenn die aktuelle Temperatur des Lebensmittels (101) die erste Zieltemperatur erreicht hat, wobei die vorbestimmte Beziehung zwischen Heizzeit und Lebensmitteltemperatur durch eine Funktion gekennzeichnet sind von:

$$T_c = -T_i * \exp(-t/P) + T_b$$

wobei $P$ eine von der Heizrate abhängige Konstante für die erste Zieltemperatur darstellt, $T_b$ die erste Zieltemperatur des Lebensmittels darstellt, $T_b$-$T_i$ ungefähr gleich der anfänglichen Lebensmitteltemperatur des Lebensmittels ist, t die Heizzeit darstellt und $T_c$ die Lebensmitteltemperatur des Lebensmittels darstellt Lebensmittel während des Heizprozesses darstellt.

**Revendications**

1. Procédé de régulation de la température d'un aliment, le procédé comprenant les étapes de:

   - chauffer l'aliment à une première température cible (802);
   - exciter un marqueur fluorescent de l'aliment, où le marqueur fluorescent comprend un fluorophore de substance nutritionnelle et/ou de substance anti-nutritionnelle dans l'aliment (804);
   - détecter une valeur paramétrique courante liée à la fluorescence du marqueur de fluorescence, et sur la base d'un temps de chauffage courant et d'une relation prédéterminée entre le temps de chauffage et la valeur paramétrique liée à la fluorescence, calculer une valeur paramétrique de référence courante liée à la fluorescence (806);
   - comparer la valeur paramétrique courante détectée liée à la fluorescence avec la valeur paramétrique de référence courante calculée liée à la fluorescence pour déterminer un résultat de comparaison (808);
   - réguler une puissance calorifique fournie à l'aliment sur la base dudit résultat de comparaison (810),

   où les relations prédéterminées entre le temps de chauffage et la valeur paramétrique liée à la fluorescence sont **caractérisées par** une fonction de:

$$I = I_0 * \exp(-kt)$$

   dans laquelle $I_0$ représente la valeur paramétrique initiale liée à la fluorescence du marqueur de fluorescence avant le processus de chauffage, k représente la constante de la vitesse de décomposition du premier ordre à la première température cible, t représente le temps de chauffage, et I représente la valeur paramétrique liée à la fluorescence.

2. Procédé selon la revendication 1, dans lequel l'étape de chauffage de l'aliment à la première température cible (802) comprend en outre les étapes de:

   - calculer une température courante de l'aliment basée sur un temps de chauffage courante et une relation prédéterminée entre le temps de chauffage et la température de l'aliment;
   - juger si la température courante de l'aliment a atteint la première température cible;
   - effectuer l'étape d'excitation d'un marqueur fluorescent de l'aliment si la température courante de l'aliment a atteint la première température cible.

3. Procédé selon la revendication 2, dans lequel les relations prédéterminées entre le temps de chauffage et la température de l'aliment sont **caractérisées par** une fonction de:

$$T_c = -T_i * \exp(-t/P) + T_b$$

   dans laquelle $P$ représente une constante dépendante de la vitesse de chauffage pour la première température cible, $T_b$ représente la première température cible de l'aliment, $T_b$-$T_i$ est approximativement égal à la température initiale de l'aliment, t représente le temps de chauffage et $T_c$ représente la température d'aliment de l'aliment pendant le processus de chauffage.

4. Procédé selon la revendication 1, dans lequel l'étape de chauffage de l'aliment à la première température cible (802) comprend en outre les étapes de:

- détecter une pluralité de valeurs paramétriques liées à la fluorescence du marqueur de fluorescence après le marqueur fluorescent de l'aliment est excité;
- déterminer une température absolue courante de l'aliment, basée sur la pluralité des valeurs paramétriques liées à la fluorescence et des relations prédéterminées entre les valeurs paramétriques liées à la fluorescence, le temps de chauffage et la température absolue;
- juger si la température absolue courante de l'aliment a atteint la première température cible;
- effectuer l'étape d'excitation d'un marqueur fluorescent de l'aliment si la température absolue courante de l'aliment a atteint la première température cible.

5. Procédé selon la revendication 1, dans lequel l'étape de régulation d'une puissance calorifique fournie à l'aliment (810) comprend:

- augmenter la puissance calorifique fournie à l'aliment si le résultat de la comparaison indique que le paramètre courant détecté lié à la fluorescence est plus grand que le paramètre de référence courant calculé lié à la fluorescence; et diminuer la puissance calorifique fournie à l'aliment si le résultat de comparaison indique que le paramètre courant détecté lié à la fluorescence est inférieur au paramètre de référence courant calculé lié à la fluorescence.

6. Procédé selon la revendication 1, comprenant en outre les étapes de:

- chauffer l'aliment de la première température cible à une deuxième température cible;
- exciter un marqueur fluorescent de l'aliment (804);
- détecter une valeur paramétrique courante liée à la fluorescence du marqueur de fluorescence, et sur la base d'un temps de chauffage courant et d'une relation prédéterminée entre le temps de chauffage et la valeur paramétrique liée à la fluorescence, calculer une valeur paramétrique de référence courante liée à la fluorescence (806);
- comparer la valeur paramétrique courante détectée liée à la fluorescence avec la valeur paramétrique de référence courante calculée liée à la fluorescence (808);
- réguler une puissance calorifique fournie à l'aliment basée sur un résultat de comparaison (810);

où le temps de chauffage courant est remis à zéro et recompté au point de départ du chauffage de la première température cible à la deuxième température cible, et les relations prédéterminées entre le temps de chauffage et la valeur paramétrique liée à la fluorescence sont **caractérisées par** une fonction de:

$$I = I_0 * \exp(-kt)$$

dans laquelle $I_0$ représente la valeur paramétrique liée à la fluorescence du marqueur de fluorescence au point de départ du chauffage de la première température cible à la deuxième température cible, $k$ représente la constante de la vitesse de décomposition du premier ordre à la deuxième température cible, t représente le temps de chauffage, et I représente la valeur paramétrique liée à la fluorescence.

7. Procédé selon la revendication 6, dans lequel l'étape de chauffage de l'aliment de la première température cible à une deuxième température cible comprend en outre:

- calculer une température courante de l'aliment basée sur un temps de chauffage courant et une relation prédéterminée entre le temps de chauffage et la température de l'aliment;
- juger si la température courante de l'aliment a atteint la deuxième température cible;
- effectuer l'étape d'excitation d'un marqueur fluorescent de l'aliment si la température courante de l'aliment a atteint la deuxième température cible;

où le temps de chauffage courant est remis à zéro et recompté au point de départ du chauffage de la première température cible à la deuxième température cible, et les relations prédéterminées entre le temps de chauffage et la température de l'aliment sont **caractérisées par** une fonction de:

$$T_c = -T_i * \exp(-t/P) + T_b$$

dans laquelle *P* représente une constante dépendante de la vitesse de chauffage pour la deuxième température cible, $T_b$ représente la deuxième température cible de l'aliment, $T_b$-$T_i$ est approximativement égal à la première température cible de l'aliment, t représente le temps de chauffage et $T_c$ représente la température d'aliment de l'aliment pendant le processus de chauffage.

**8.** Procédé selon la revendication 1, comprenant en outre les étapes de:

- refroidir l'aliment de la première température cible à une troisième température cible;
- exciter un marqueur fluorescent de l'aliment (804);
- détecter une valeur paramétrique courante liée à la fluorescence du marqueur de fluorescence, et basée sur un temps de chauffage courant et une relation prédéterminée entre le temps de chauffage et la valeur paramétrique liée à la fluorescence, calculer la valeur paramétrique de référence courante liée à la fluorescence (806);
- comparer la valeur paramétrique courante détectée liée à la fluorescence avec la valeur paramétrique de référence courante calculée liée à la fluorescence (808);
- réguler une puissance calorifique fournie à l'aliment basée sur un résultat de comparaison (810);

où le temps de chauffage courant est remis à zéro et recompté au point de départ du refroidissement de la première température cible à la troisième température cible, et les relations prédéterminées entre le temps de chauffage et la valeur paramétrique liée à la fluorescence sont **caractérisées par** une fonction de:

$$I = I_0 * \exp(-kt)$$

dans laquelle $I_0$ représente la valeur paramétrique liée à la fluorescence du marqueur de fluorescence au point de départ du refroidissement de la première température cible à la troisième température cible, *k* représente la constante de la vitesse de décomposition du premier ordre à la troisième température cible, t représente le temps de chauffage et I représente la valeur paramétrique liée à la fluorescence.

**9.** Procédé selon la revendication 8, dans lequel l'étape de refroidissement de l'aliment de la première température cible à la troisième température cible comprend en outre les étapes de:

- calculer une température courante de l'aliment basée sur un temps de chauffage courant et une relation prédéterminée entre le temps de chauffage et la température de l'aliment;
- juger si la température courante de l'aliment a atteint la troisième température cible;
- effectuer l'étape d'excitation d'un marqueur fluorescent de l'aliment si la température courante de l'aliment a atteint la troisième température cible; où le temps de chauffage courant est remis à zéro et recompté au point de départ du refroidissement de la première température cible à la troisième température cible, et les relations prédéterminées entre le temps de chauffage et la température de l'aliment sont **caractérisées par** une fonction de:

$$T_d = T_{d1} * \exp(-t/D_1) + T_{d2} * \exp(-t/D_2) + T_f$$

dans laquelle $T_f$ représente la troisième température cible, $T_{d1}$+$T_{d2}$+$T_f$ est approximativement égale à la première température cible, $D_1$, $D_2$ est la température et la constante de la vitesse décroissante dépendant de l'environnement à la première température cible, t représente le temps de chauffage, et $T_d$ représente la température d'aliment de l'aliment.

**10.** Procédé selon la revendication 1, comprenant en outre les étapes de:

- recevoir des informations sur un état initial de l'aliment et la première température cible de l'aliment;
- détecter la valeur paramétrique initiale liée à la fluorescence du marqueur de fluorescence avant le processus de chauffage;

où l'étape de calcul de la valeur paramétrique de référence courante liée à la fluorescence comprend:

- calculer la valeur paramétrique courante de référence liée à la fluorescence basée sur des informations reçues de l'état initial de l'aliment et la première température cible de l'aliment, la valeur paramétrique initiale détectée liée à la fluorescence, un temps courant de chauffage et une relation prédéterminée entre le temps de chauffage et la valeur paramétrique liée à la fluorescence.

11. Procédé selon la revendication 1, dans lequel le paramètre lié à la fluorescence comprend l'un quelconque de: l'intensité de la fluorescence, l'énergie de crête de la fluorescence, le rapport d'intensité de crête, la largeur de bande, la forme de bande, la polarisation, le décalage spectral et la durée de vie des états excités; et le marqueur fluorescent comprend l'un quelconque de: vitamine E, dérivés de chlorophylle, et composés d'oxydation.

12. Dispositif (100) pour réguler la température des aliments, le dispositif comprenant:

- un récipient (102) configuré pour recevoir l'aliment (101) ;
- un réchauffeur (103) configuré pour chauffer l'aliment (101) à une première température cible;
- une source lumineuse (104) configurée pour exciter un marqueur fluorescent de l'aliment (101), où le marqueur fluorescent comprend un fluorophore de substance nutritionnelle et/ou de substance anti-nutritionnelle dans l'aliment;
- un détecteur (105) configuré pour détecter la valeur paramétrique courante liée à la fluorescence du marqueur de fluorescence;
- un dispositif de régulation (106) configuré pour recevoir la valeur paramétrique courante détectée liée à la fluorescence du détecteur (105), calculer la valeur paramétrique de référence courante liée à la fluorescence basée sur un temps de chauffage courant et des relations prédéterminées entre le temps de chauffage et la valeur paramétrique liée à la fluorescence, comparer la valeur paramétrique courante détectée liée à la fluorescence avec la valeur paramétrique de référence courante calculée liée à la fluorescence, et réguler la puissance calorifique du réchauffeur sur la base d'un résultat de comparaison, où les relations prédéterminées entre le temps de chauffage et la valeur paramétrique liée à la fluorescence sont **caractérisées par** un fonction de:

$$I = I_0 * \exp(-kt)$$

dans laquelle $I_0$ représente la valeur paramétrique initiale liée à la fluorescence du marqueur de fluorescence avant le processus de chauffage, k représente la constante de la vitesse de décomposition du premier ordre à la première température cible, t représente le temps de chauffage, et I représente la valeur paramétrique liée à la fluorescence.

13. Dispositif (100) selon la revendication 12, dans lequel pendant le processus de chauffage, le dispositif de régulation (106) est en outre configuré pour calculer la température courante de l'aliment (101) basée sur un temps de chauffage courant et des relations prédéterminées entre le temps de chauffage et la température de l'aliment, juger si la température courante de l'aliment (101) a atteint la première température cible, et réguler la source lumineuse (104) pour exciter si la température courante de l'aliment (101) a atteint la première température cible, où les relations entre le temps de chauffage et la température de l'aliment sont **caractérisées par** une fonction de:

$$T_c = -T_i * \exp(-t/P) + T_b$$

dans laquelle $P$ représente une constante dépendante de la vitesse de chauffage pour la première température cible, $T_b$ représente la première température cible de l'aliment, $T_b$-$T_i$ est approximativement égal à la température initiale de l'aliment, t représente le temps de chauffage et $T_c$ représente la température d'aliment de l'aliment pendant le processus de chauffage.

FIG. 1

FIG. 2

FIG. 3

FIG. 4

FIG. 5

FIG. 6

FIG. 7

FIG. 8

**EP 3 027 033 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102008009660 A1